# EUROPEAN PATENT SPECIFICATION

(11) **EP 3 059 918 B1**
(45) Date of publication and mention of the grant of the patent: **12.12.2018**
(21) Application number: 15000521.3
(22) Date of filing: 23.02.2015
(51) Int. Cl.: H04L 29/06, H04W 12/08, G06Q 20/32

(54) **Method for accessing a security element**
VERFAHREN ZUM ZUGRIFF AUF EIN SICHERHEITSELEMENT
PROCÉDÉ POUR ACCÉDER À UN ÉLÉMENT DE SÉCURITÉ

(43) Date of publication of application: 24.08.2016
(73) Proprietor: Giesecke+Devrient Mobile Security GmbH, 81677 München (DE)
(72) Inventor: Tea, Vui Huang, SE-12061 Stockholm (SE)

(56) References cited:
- WO-A1-2011/110539
- WO-A1-2013/054073
- WO-A1-2014/095850
- WO-A2-2012/091349

## Description

The present invention relates to a method for accessing a security element of a mobile end device. More precisely, the invention relates to a method for secure data communication between an application which is executable on a mobile end device, and a security element, e.g. a SIM/UICC, which is integrated in the mobile end device.

For securely conducting a transaction, for example a payment transaction, between a mobile end device, such as a smartphone, and a transaction server, for example a bank or an arbitrary other service provider, it is desirable that transaction data transmitted on the part of the end device to the transaction server are cryptographically secured, for example cryptographically signed. Secret keys required for securing or signing can be stored in a security element of the end device in the known manner.

However, it is problematic in this connection that usual applications, so-called "apps", which can be made available on the part of the service provider and be installed and executed on the user's end device for conducting such a transaction, do not always have access to the security element of the end device. Different end-device manufacturers and/or end-device operating systems restrict access to the security element to a limited class of uses, for example to manufacturer-specific applications and/or operating-system routines. In some cases, no defined programming interface (API) is made available on the part of the end-device manufacturer for accessing the security element by an application on the end device.

WO 2013/054073 A1 relates to a secure ID authentication system for authenticating over a cellular radio network, a response from a user module comprising a SIM card to a request from an application programming interface external to the mobile phone.

WO 2012/091349 A2 relates to a method for provisioning a contactless card applet in a mobile device with a mobile wallet application.

WO2011/110539 A1 relates to cryptographic signing of electronic documents and in particular to using a smart card to sign a document for a user in response to a request to have the document signed for the user by a network signing service.

Consequently, it is the object of the present invention to propose a method for secure data communication between an application on a mobile end device and a security element of the end device.

This object is achieved by a method and a system having the features of the independent claims. Preferred embodiments and developments are stated in the dependent claims.

The present invention is based on the idea of redirecting the communication between the applications and the security element of the end device via an external bypass server, and addressing the security element of the end device via an already existing communication interface which is employed for example on the part of a network operator for managing a security element, such as for example an over-the-air (OTA) interface.

Concretely, a preferred embodiment of a method for secure data communication between an application which is executable on a mobile end device, preferably on an application processor of such an end device, and a security element which is integrated in the mobile end device, such as for example a SIM or a UICC mobile radio card, comprises the following steps:
There is made available a bypass server which is arranged for setting up with the application on the mobile end device a first, preferably secure data communication channel, for example via an SSL connection. Further, the bypass server is arranged for setting up with the security element in the end device a second, preferably likewise secure data communication channel independent of and different from the first data communication channel. Said second data communication channel is preferably set up via a standardized over-the-air (OTA) interface, for example according to the specification TS 43.048. The bypass server will normally be associated with an operator of the mobile radio network who has issued the security element integrated into the end device or manages such a security element. Alternatively, the bypass server can also be made available by a trustworthy third entity, for example by order of the network operator.

The application then transmits a query message directed to the security element to the bypass server via the first data communication channel.
The bypass server relays the query message to the security element in the end device via the second data communication channel.

The security element in the end device processes the query message and transmits a response message directed to the application to the bypass server via the second data communication channel.

The bypass server finally relays the response message to the application via the first data communication channel.

The advantages of the method according to the invention are evident and numerous. The method can be executed employing conventional, standardized and established data communication channels and communication protocols. Neither the mobile end device or its operating system nor the security element has to be adapted to the method. No changes are required in existing systems either. Only the bypass server must be added to a conventional system for mobile data communication, or a server of the network operator must be added to by the described relaying functionalities.

The application on the end device can be adapted to the method and installed on the mobile end device in the conventional manner. The method is in principle executable independently of platform and of operating system. A seamless integration into existing systems is readily possible. Manufacturer-specific features, in particular lacking or non-defined interfaces between an application on the end device and a security element integrated in the end device, can be bypassed according to the invention and pose no further problem. For the user of the end device the method can remain completely transparent, that is to say, the existence of the bypass server is not recognizable to the user of the end device.

The query message normally comprises at least a data portion. Said data portion is preferably made available by the application on the end device. For this purpose, the application on the end device can in particular receive information from a transaction server and/or a user of the end device via a suitable interface, for example an input interface of the end device. The data portion can in particular define a transaction to be conducted between the end device and a transaction server, as to be stated more precisely hereinafter.

The query message can further, alternatively or additionally, comprise at least a command portion. Said command portion serves in particular for instructing the security element in which manner the query message, in particular a data portion of the query message, is to be processed. In principle, the command portion can also comprise instructions for the bypass server, for example as to how a query message is to be preprocessed for the security element before being relayed to the security element, as to be described more clearly hereinafter.

According to a first preferred embodiment, the bypass server relays the query message to the security element unchanged. That is to say, according to this embodiment the bypass server acts only as an entity that receives the query message from the application and relays it to the security element in the end device unchanged, i.e. without a data portion and/or a command portion being changed. It will be appreciated that a protocol frame necessary for data communication, into which the query message is embedded and which depends on the communication protocol employed between application and bypass server or between bypass server and security element, is not heeded here.

According to a second preferred embodiment, the bypass server can preprocess the query message for the security element before relaying it to the security element. Such processing can consist in particular in the bypass server adding a command portion to a query message consisting only of a data portion. The command portion can in particular comprise commands that the security element in the end device then executes in order to process the data portion of the query message in order to generate the response message. The preprocessing step can also consist in the bypass server converting a command of a higher, more abstract level to concrete commands executable for the security element, for example APDU commands.

It is mentioned here by way of clarification that no conceptual distinction is made in connection with the present invention between the query message that is transmitted by the application on the end device to the bypass server and a query message possibly changed and/or added to by the bypass server that is then relayed to the security element in the end device. It will emerge from the respective context, if this is required, whether or not and in which manner the bypass server has changed and/or added to the query message received from the application. This is in principle irrelevant to the basic idea of the present invention, which is that a data communication between the application on the end device and the security element integrated in the end device, which is not possible in some systems, is redirected via the bypass server and thereby made possible, while employing already existing interfaces and protocols.

According to a further embodiment, it can be provided that a complete processing of the query message by the security element in the end device requires an input of a processing confirmation. Such a processing confirmation could be effected for example on the part of a user of the end device, for example by inputting a PIN or the like.

According to a further, preferred embodiment of the invention, the processing of the query message by the security element comprises a step of cryptographically processing, in particular cryptographically signing, a data portion of the query message. Such a cryptographic processing step is normally based on secret data, for example secret keys, which are stored securely in the security element of the end device.

Particularly preferably, the bypass server will relay the response message that it receives from the security element of the end device via the second data communication channel, to the application on the end device unchanged. In general, it is not provided that the bypass server adds to and/or modifies the response message before relaying the response message to the application on the end device. The bypass server acts here as a mere relaying entity. As already explained hereinabove, a relayed response message is also considered unchanged here when the protocol frame transporting the response message (in a data frame) changes due to a changed communication protocol that is employed on the first or the second data communication channel.

Evidently, the method explained in the present case can be implemented especially advantageously for securely conducting a transaction between the end device, that is, in particular the application on the end device, and an external transaction server. The response message here comprises transaction data for conducting a transaction between the end device and the transaction terminal. Preferably, the response message comprises cryptographically processed, in particular cryptographically signed, data portions.

The transaction data received by the end device can then be transmitted to the transaction server on the part of the end device, in a final step, for conducting the transaction.

In this manner the problem described at the outset can be solved securely and reliably. That is to say, the conducting of a transaction between the end device, that is, the application on the end device, and an external transaction server or transaction terminal can be safeguarded by it being possible for sensitive transaction data, for example data defining a payment transaction, to be cryptographically processed, in particular cryptographically signed and/or encrypted, by means of secret keys stored in the security element. For example, a transaction specific or session specific one-time password thus can be generated for the transaction.

A preferred embodiment of a bypass server according to the invention is, as mentioned hereinabove, arranged for setting up with an application executable on a mobile end device a first, preferably secure data communication channel, and arranged for setting up with a security element integrated in the end device a second, preferably likewise secure data communication channel independent of and different from the first data communication channel. The second data communication channel is preferably made available via an over-the-air (OTA) interface, for example via SMS or a corresponding IP-based data communication. The bypass server is characterized in that it is arranged for supporting a hereinabove described method for data communication between an application on the end device and a security element integrated into the end device.

A preferred embodiment of a system according to the invention comprises at least one hereinabove described bypass server, at least one mobile end device having an application executable thereon, and a security element integrated in the end device, as well as a transaction server, where applicable. The components of the system are arranged for executing a method of the hereinabove described type.

As mobile end devices for the purposes of the present invention there can be employed suitable portable devices, for example mobile radio end devices, smartphones, tablets, notebooks, wearables and the like. Preferably, the mobile end device includes separate network interfaces (OTA and IP) for both communication channels.

A security element for the purposes of the present invention can be firmly integrated into such a mobile end device, for example in the form of an eSIM, or in the form of a specific, secure portion of a processor of the end device ("trusted execution environment", TEE). Alternatively, a security element can also be integrated into the end device removably, for example in the form of a conventional SIM or UICC mobile radio card or the like. In a variant the security element may be connected to its mobile end device via a local wireless link, such as NFC, RFID or Bluetooth, wherein optionally the wirelessly linked security element (or the unit in which it is integrated) includes the network interface(s) for both communication channels.

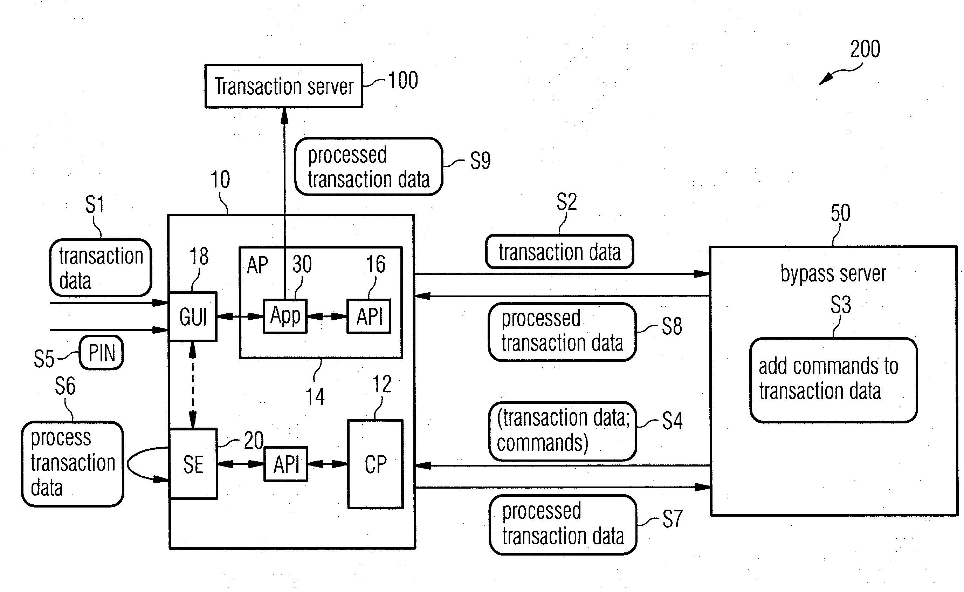

The present invention will be described hereinafter by way of example with reference to the attached drawing.

The figure shows a preferred embodiment of a system 200 for conducting a transaction between a transaction server 100 and an application 30 on a mobile end device 10 into which a security element 20 is integrated.

The system 200 further comprises a bypass server 50. The latter serves in the hereinafter described manner for enabling a data communication between the application 30 and the security element 20.

The end device 10, which can be configured for example as a conventional smartphone, comprises in the conventional manner an application processor (AP) 14 which is arranged for executing applications (so-called "apps") installed on the end device 10, such as for example the application 30. The application processor 14 can comprise a programming interface (API) 16 via which the application 30 can communicate with an external server, for example the bypass server 50.

Further, the end device 10 comprises, likewise in the conventionally known manner, a communication processor (CP) 12 via which the security element 20 can communicate with the bypass server 50, for example via an over-the-air (OTA) interface.

In principle it is possible that a processor of the end device 10 comprises the functionalities of the processors 12, 14, or that said functionalities are distributed over more than the two processors 12, 14.

A graphic user interface (GUI) 18, for example a touch-sensitive display, can be employed for inputting arbitrary data to the end device 10 or the application 30, and for outputting arbitrary output data, for example displaying them.

For conducting a transaction between the application 30 and the transaction server 100, the following steps can be executed.

In a first step S1, a user of the end device 10 can input query data defining a transaction (hereinafter "transaction data") via the user interface 18. Alternatively or additionally, transaction data can also be exchanged between the application 30 and the transaction server 100, for example via a contactless interface (not shown), e.g. in the form of an NFC interface or the like. The inputted and/or received transaction data can be suitably edited and/or added to before being transmitted to the bypass server 50 (cf. step S2) by the application 30.

As mentioned hereinabove, the application 30 transmits, via the API 16, a query message, in the shown example in the form of transaction data, to the bypass server 50 via a first data communication channel in step S2. Said transaction data can describe a transaction to be conducted, for example a payment transaction, and comprise the accordingly necessary information, for example the name and account data of the user of the end device and particulars of the goods and/or service to be paid for.

In an optional preprocessing step S3, the bypass server 50 adds commands - in the shown example - to the query message. Said commands serve for indicating to the security element 20 of the end device 10 in which manner the query message, i.e. the transaction data, are to be processed on the part of the security element 20.

In principle, the step S3 of adding command data to the query message can be completely omitted or also effected through the API 16 of the application processor 14. In such a case, the bypass server 50 would relay the query message received in step S2 to the security element 20 of the end device 10 unchanged in step S4.

In the shown example, the bypass server 50 relays the transaction data with the commands added, which together constitute the query message, to the security element 20 of the end device 10 via a second data communication channel in step S4. The bypass server 50 can relay the query message to the security element 20 via an over-the-air (OTA) interface, for example as a short data message (SMS).

By receiving the query message, for example the SMS, the security element, or a processing entity executed in the security element, for example in the form of a SIM toolkit interpreter, is prompted to execute the commands that are contained in the query message. A first one of said commands can stipulate for example that the security element 20 prompts the end device 10 to display the transaction data contained in the query message via the interface 18, i.e. the display of the end device 10, for verification by the user of the end device 10. Further, there can be requested by means of such a command a confirmation for further processing of the query message.

In step S5, the user of the end device 10 can then input a corresponding processing confirmation, for example by inputting a PIN.
However, user interaction may be optional, an input is not always required. For example, the application (30) could communicate with the security element (20) without user interaction for obtaining a one-time password (OTP) generated by the security element (20) or even for checking only if there is any data or message that the security element (20) would like to send to the application (30).

In step S6, there is then effected a complete processing of the query message through the security element 20 of the end device 10, by the further commands contained in the query message being executed on the part of the security element 20. Said commands can for example prompt the security element 20 to cryptographically sign the transaction data contained in the query message. For this purpose there can be employed a secret key (not shown) of the user of the end device 10 that is stored in the security element 20. Alternatively, the transaction data can also be cryptographically processed by the security element 20 in another suitable manner, with for example a so-called "message authentication code" (MAC) being computed on the basis of the transaction data.

The processed transaction data, i.e. in the present example the cryptographically signed transaction data, are then transmitted in step S7 by the security element 20, again via the second data communication channel, i.e. the over-the-air interface, as a response message directed to the application 30 on the end device 10, to the bypass server 50, which relays said response message to the application 30 via the first data communication channel unchanged in step S8.

In advanced scenarios where the data to be bypassed is too large for SMS, HTTP-OTA 'push' transport could be used. In such a situation, additional steps are S3A where an SMS trigger is sent from the bypass server (50) to the SIM card, then on reception of the SMS trigger, step S3B occurs in which the SIM card initiates an HTTP-PULL to the bypass server (50). After that step S4 and S7 will be performed over an IP transport (instead of SMS). There could also be an all-IP HTTP-Push in which all transport is using IP. It should be noted that, although possibly using the same transport protocol, the first and the second data communication channel are physically separate channels. Both data communication channels have different physical end-points and thus are independent.

In step S9, the application 30 finally transmits the response message, that is, the signed transaction data, for conducting the transaction to the transaction server 100. There, the signature can be checked in the conventionally known manner and, if it is regarded as authentic, the transaction conducted.

## Claims

1. A method for data communication between an application (30) which is executed on a mobile end device (10), and a security element (20) of the mobile end device (10), wherein the application (30) has no access to the security element (20) and a bypass server (50) is arranged for setting up with the application (30) on the mobile end device (10) a first data communication channel, and is arranged for setting up with the security element (20) of the mobile end device (10) a second data communication channel independent of and different from the first data communication channel; comprising the steps of:
- transmitting (S2) a query message by the application (30) directed to the security element (20) to the bypass server (50) via the first data communication channel;
- relaying (S4) the query message by the bypass server (50) to the security element (20) via the second data communication channel;
- processing (S6) the query message in the security element (20) and transmitting (S7) a response message by the security element (20) directed to the application (30) to the bypass server (50) via the second data communication channel; and
- relaying (S8) the response message by the bypass server (50) to the application (30) via the first data communication channel.

2. The method according to claim 1, **characterized in that** there is employed as the second data communication channel an over-the-air interface.

3. The method according to claim 1 or 2, **characterized in that** the query message comprises at least a data portion.

4. The method according to any of claims 1 to 3, **characterized in that** the query message comprises at least a command portion.

5. The method according to any of claims 1 to 4, **characterized in that** the bypass server (50) relays the query message to the security element (20) unchanged.

6. The method according to any of claims 1 to 4, **characterized in that** the bypass server (50) preprocesses (S3) the query message before relaying it.

7. The method according to claim 6, **characterized in that** the bypass server (50) adds (S3) a command portion to the query message before relaying it.

8. The method according to any of claims 1 to 7, **characterized in that** a complete processing of the query message by the security element (20) requires an input of a processing confirmation.

9. The method according to any of claims 1 to 8, **characterized in that** the processing of the query message in the security element (20) comprises a step of cryptographically processing, in particular cryptographically signing and/or encrypting, a data portion of the query message.

10. The method according to any of claims 1 to 9, **characterized in that** the bypass server (50) relays the response message to the application (30) unchanged.

11. The method according to any of claims 1 to 10, **characterized in that** the response message comprises transaction data for conducting a transaction between the mobile end device (10), in particular the application (30) on the mobile end device (10), and a transaction server (100).

12. The method according to claim 11, **characterized by** the further step of:
- transmitting (S9) the transaction data to the transaction server (100) by the mobile end device (10), in particular by the application (30) on the mobile end device (10), for conducting the transaction.

13. A system (200) comprising a bypass server (50), a mobile end device (10) with an application (30) executable thereon, and a security element (20) of the mobile end device (10), wherein the components of the system (200) are arranged for carrying out a method according to any of claims 1 to 12.

## Patentansprüche

1. Verfahren zur Datenkommunikation zwischen einer Anwendung (30), die auf einem mobilen Endgerät (10) ausgeführt wird und einem Sicherheitselement (20) des mobilen Endgeräts (10), wobei die Anwendung (30) keinen Zugriff auf das Sicherheitselement (20) besitzt und ein Bypass-Server (50) eingerichtet ist, mit der Anwendung (30) auf dem mobilen Endgerät (10) einen ersten Datenkommunikationskanal aufzusetzen und eingerichtet ist, mit dem Sicherheitselement (20) des mobilen Endgeräts (10) einen zweiten Datenkommunikationskanal unabhängig von und unterschiedlich von dem ersten Datenkommunikationskanal aufzusetzen; umfassend die Schritte:
- Übermitteln (S2) einer an das Sicherheitselement (20) gerichteten Anfragenachricht durch die Anwendung (30) an den Bypass-Server (50) über den ersten Datenkommunikationskanal;
- Weiterleiten (S4) der Anfragenachricht durch den Bypass-Server (50) an das Sicherheitselement (20) über den zweiten Datenkommunikationskanal;
- Verarbeiten (S6) der Anfragenachricht in dem Sicherheitselement (20) und Übermitteln (S7) einer an die Anwendung (30) gerichteten Antwortnachricht durch das Sicherheitselement (20) an den Bypass-Server (50) über den zweiten Datenkommunikationskanal; und
- Weiterleiten (S8) der Antwortnachricht durch den Bypass-Server (50) an die Anwendung (30) über den ersten Datenkommunikationskanal.

2. Verfahren nach Anspruch 1, **dadurch gekennzeichnet, dass** eine OTA-Schnittstelle (over-the-air interface) als der zweite Datenkommunikationskanal verwendet wird.

3. Verfahren nach Anspruch 1 oder 2, **dadurch gekennzeichnet, dass** die Anfragenachricht wenigstens einen Datenabschnitt umfasst.

4. Verfahren nach einem der Ansprüche 1 bis 3, **dadurch gekennzeichnet, dass** die Anfragenachricht wenigstens einen Kommandoabschnitt umfasst.

5. Verfahren nach einem der Ansprüche 1 bis 4, **dadurch gekennzeichnet, dass** der Bypass-Server (50) die Anfragenachricht an das Sicherheitselement (20) unverändert weiterleitet.

6. Verfahren nach einem der Ansprüche 1 bis 4, **dadurch gekennzeichnet, dass** der Bypass-Server (50) die Anfragenachricht vor dem Weiterleiten vorverarbeitet (S3).

7. Verfahren nach Anspruch 6, **dadurch gekennzeichnet, dass** der Bypass-Server (50) vor dem Weiterleiten einen Kommandoabschnitt zu der Anfragenachricht hinzufügt.

8. Verfahren nach einem der Ansprüche 1 bis 7, **dadurch gekennzeichnet, dass** ein komplettes Verarbeiten der Anfragenachricht durch das Sicherheitselement (20) die Eingabe einer Verarbeitungsbestätigung erfordert.

9. Verfahren nach einem der Ansprüche 1 bis 8, **dadurch gekennzeichnet, dass** das Verarbeiten der Anfragenachricht in dem Sicherheitselement (20) ein Schritt des kryptographischen Verarbeitens, insbesondere kryptographischen Signierens und/oder Verschlüsselns eines Datenabschnitts der Anfragenachricht umfasst.

10. Verfahren nach einem der Ansprüche 1 bis 9, **dadurch gekennzeichnet, dass** der Bypass-Server (50) die Antwortnachricht an die Anwendung (30) unverändert weiterleitet.

11. Verfahren nach einem der Ansprüche 1 bis 10, **dadurch gekennzeichnet, dass** die Antwortnachricht Transaktionsdaten zum Durchführen einer Transaktion zwischen dem mobilen Endgerät (10), insbesondere der Anwendung (30) auf dem mobilen Endgerät (10), und einem Transaktions-Server (100) umfasst.

12. Verfahren nach Anspruch 11, **gekennzeichnet durch** den weiteren Schritt:
- Übermitteln (S9) der Transaktionsdaten an den Transaktionsserver (100) durch das mobile Endgerät (10), insbesondere durch die Anwendung (30) auf dem mobilen Endgerät (10), zum Durchführen der Transaktion.

13. System (200), umfassend einen Bypass-Server (50), ein mobiles Endgerät (10) mit einer darauf ausführbaren Anwendung (30) und ein Sicherheitselement (20) des mobilen Endgeräts (10), wobei die Komponenten des Systems (200) eingerichtet sind zum Ausführen eines Verfahrens nach einen der Ansprüche 1 bis 12.

## Revendications

1. Procédé de communication de données entre une application (30), laquelle est exécutée sur un dispositif terminal mobile (10), et un élément de sécurité (20) du dispositif terminal mobile (10), dans lequel l'application (30) ne dispose d'aucun accès à l'élément de sécurité (20), et un serveur de dérivation (50) est agencé pour paramétrer avec l'application (30) sur le dispositif terminal mobile (10) une première voie de communication de données, et est agencé pour paramétrer avec l'élément de sécurité (20) du dispositif terminal mobile (10) une seconde voie de communication de données, de manière indépendante et différente de la première voie de communication de données, comprenant les étapes consistant à :
- transmettre (S2) un message d'interrogation par l'application (30) dirigé vers l'élément de sécurité (20) au serveur de dérivation (50) via la première voie de communication de données ;
- relayer (S4) le message d'interrogation par le serveur de dérivation (50) vers l'élément de sécurité (20) via la seconde voie de communication de données ;
- traiter (S6) le message d'interrogation dans l'élément de sécurité (20) et transmettre (S7) un message de réponse dirigé vers l'application (30) par l'élément de sécurité (20) vers le serveur de dérivation (50) via la seconde voie de communication de données, et
- relayer (S8) le message de réponse par le serveur de dérivation (50) vers l'application (30) via la première voie de communication de données.

2. Procédé selon la revendication 1, **caractérisé par** le recours à une interface par liaison radio comme seconde voie de communication de données.

3. Procédé selon la revendication 1 ou 2, **caractérisé en ce que** le message d'interrogation comprend au moins une portion de données.

4. Procédé selon l'une quelconque des revendications 1 à 3, **caractérisé en ce que** le message d'interrogation comprend au moins une portion d'instruction.

5. Procédé selon l'une quelconque des revendications 1 à 4, **caractérisé en ce que** le serveur de dérivation (50) relaie le message d'interrogation vers l'élément de sécurité (20) de manière inchangée.

6. Procédé selon l'une quelconque des revendications 1 à 4, **caractérisé en ce que** le serveur de dérivation (50) traite au préalable (S3) le message d'interrogation avant de le relayer.

7. Procédé selon la revendication 6, **caractérisé en ce que** le serveur de dérivation (50) ajoute (S3) une portion d'instruction au message d'interrogation avant de le relayer.

8. Procédé selon l'une quelconque des revendications 1 à 7, **caractérisé en ce qu'**un traitement complet du message d'interrogation par l'élément de sécurité (20) nécessite une entrée d'une confirmation de traitement.

9. Procédé selon l'une quelconque des revendications 1 à 8, **caractérisé en ce que** le traitement du message d'interrogation dans l'élément de sécurité (20) comprend une étape pour traiter par voie cryptographique, en particulier par une signature cryptographique et/ou un chiffrement, une portion de données du message d'interrogation.

10. Procédé selon l'une quelconque des revendications 1 à 9, **caractérisé en ce que** le serveur de dérivation (50) relaie le message d'interrogation vers l'application (30) de manière inchangée.

11. Procédé selon l'une quelconque des revendications 1 à 10, **caractérisé en ce que** le message d'interrogation comprend des données de transaction pour réaliser une transaction entre le dispositif terminal mobile (10), en particulier l'application (30) sur le dispositif terminal mobile (10), et un serveur de transaction (100).

12. Procédé selon la revendication 11, **caractérisé par** l'étape supplémentaire suivante :
- transmettre (S9) les données de transaction au serveur de transaction (100) par le dispositif terminal mobile (10), en particulier l'application (30) sur le dispositif terminal mobile (10), pour réaliser la transaction.

13. Système (200) comprenant un serveur de dérivation (50), un dispositif terminal mobile (10) avec une application (30) exécutable sur celui-ci, et un élément de sécurité (20) du dispositif terminal mobile (10), dans lequel les composants du système (200) sont agencés pour mettre en oeuvre un procédé selon l'une quelconque des revendications 1 à 12.
